Europäisches Patentamt

European Patent Office

Office européen des brevets

(11) Publication number: **0 153 530**
A2

(12) **EUROPEAN PATENT APPLICATION**

(21) Application number: **84307538.3**

(22) Date of filing: **01.11.84**

(51) Int. Cl.⁴: **C 02 F 1/68**

(30) Priority: **23.02.84 US 582661**

(43) Date of publication of application:
**04.09.85 Bulletin 85/36**

(84) Designated Contracting States:
**BE DE FR GB IT NL**

(71) Applicant: **SYBRON CORPORATION**
**1100 Midtown Tower**
**Rochester, NY 14604(US)**

(72) Inventor: **Shaver, Fred A.**
**88 Forest Avenue**
**Cohasset Massachusetts(US)**

(72) Inventor: **O'Connor, David J.**
**27 Chestnut Street**
**Mansfield Massachusetts(US)**

(74) Representative: **Oliver, Roy Edward et al,**
**POLLAK MERCER & TENCH High Holborn House 52-54**
**High Holborn**
**London WC1V 6RY(GB)**

(54) Method and apparatus for dosing a flowing liquid stream.

(57) In an apparatus and a method of dosing a flowing stream of a first liquid, e.g. water, with a second liquid, e.g. a solution of a dosing chemical, in a main (10), dosing rate is proportional to the pressure drop across a laminar flow zone (21) in the water main (10). An adjustable laminar flow element (21) and a method of making it are disclosed.

FIG. I

This invention relates to an apparatus and a method for dosing a flowing stream of liquid and, more particularly, to an apparatus and method for accurately dosing a flowing stream of water with a second liquid, such as a solution of a chemical. The invention also concerns an improved form of laminar flow element, suitable for inclusion in the apparatus of the invention, and a method of manufacture of such laminar flow element.

In practice, there are many applications where it is desirable to dose a flowing stream of water or another liquid with small quantities of another liquid or a chemical in liquid form. A typical example of such dosing is a batch operation in which a large vessel is utilized for mixing a dosed liquid with a dosing liquid. This presents a problem, because large quantities of the dosed solution or other liquid must be stored prior to use. Furthermore, it is often necessary or desirable for flowing streams of liquids to be dosed with dosing agents in a continuous manner. For example, in reverse osmosis systems for the treatment of feedwater, the semipermeable membrane utilized can become fouled due to scaling or it can be attacked as a result of bacterial action. These two problems can be overcome if it is possible accurately to dose the flowing stream of water which is undergoing the reverse osmosis treatment with an acid, so as to control or adjust the pH and thus prevent the precipitation of dissolved salts, or with a bactericide, so as to prevent growth of the bacteria which attack the membrane.

There is also a need accurately to dose the feedwater of animals, for instance farm animals or those used in laboratory experiments. In the feeding of farm animals, it is desirable to dose the feedwater with nutrients to promote maximum growth. In the raising of laboratory animals and their use in experiments, accurate dosing of the feedwater with nutrients and medicaments is even more critical, in order to have the requisite precise control over the experiments in which the animals are used.

Still another application of a dosing arrangement is the chlorination of drinking water for human consumption. In the use of water from wells or where water is extracted from lakes for human consumption, it is desirable for it to be chlorinated prior to drinking. For this purpose, small quantities of chlorine are injected into a flowing stream of the water, usually as it is extracted from its source.

The foregoing describes a few of the many applications where a large body of one liquid has to be dosed with a small quantity of another liquid on a continuing basis. It is to be understood, however, that this invention relates to any application where one liquid is dosed with another liquid. Since the treatment of water is one of the major applications and in order to simplify and facilitate the remainder of this disclosure, the flowing stream of the first liquid is referred to as the "water stream" and the second or dosing liquid as the "dosing chemical" or the "dosing stream".

The amount of dosing chemical introduced into the water stream varies greatly from one application to the next and also with the total production capacity of the apparatus used. Generally speaking, the amount of dosing chemical required per gallon of water processed is very small. As an example, a feedwater stream containing 200 parts per million of alkalinity, as calcium carbonate, requires only 140 parts per million of dosing chemical, as sulphuric acid, in order to reduce the pH of the feed water stream to 6 and thus prevent precipitation. Bactericide levels sufficient to prevent bacteria growth similarly are small; typically, a dosage of 1 part per million as free chlorine is utilized.

A current practice in industry for delivering dilute chemical dosing streams to feedwater streams makes use of positive displacement pumps. Dilute solutions must be used, because of two characteristics of such pumps; firstly, typical displacement volumes per stroke are large in comparison to the volume of chemical required and, secondly, these pumps do not dispense solution continuously. The discontinuous nature of the operation of these pumps therefore favours the use of dilute solutions, in the interests of raising the pump stroke frequency in order to smooth out variations in chemical concentrations. The stroking action of the pump also requires the installation of a check valve at the point of dosing chemical injection, so as to prevent mixing of the dosing and water streams during the pump fillstrokes.

The use of dilute solutions, in order to avoid these problems, requires a significant increase in chemical storage volume. In the case of the 200 part per million alkalinity mentioned above, a 30-day supply of solution (assuming 8 hours per day of operation) requires a 120-litre (30 US gallon) storage tank. With a reverse osmosis treatment system of modest capacity, this represents only 40 litres per hour of product water. Larger systems would require commensurately larger storage volumes or more concentrated chemical solutions.

The use of positive displacement pumps also creates other complications. Apart from the periodic maintenance required with any mechanical device, the drive motor of the pump must be tied electrically to the system, in order to ensure that delivery of the chemical stops when the feedwater flow stops. Further, changes in the flow rate of the feedwater must be accounted for manually, by adjustment of the feed rate and/or stroke of the pump. This adjustment is necessary in order to maintain the correct chemical concentration in the flowing stream of water and periodic adjustment is to be expected during the life of the system.

Because the nature of the pump necessitates the use of dilute solutions, operators have to make close contact with concentrated chemicals, for example sulphuric acid, when the system is being employed to control or adjust the pH of water. Again, referring to the example given above, in order to establish a 30-day supply of dilute sulphuric acid, it is necessary to mix 8 1 (2.1 US gallons) of 95% sulphuric acid with 105 1 (27.9 US gallons) of water. This can present serious hazards to anyone unfamiliar with the proper mixing techniques.

There are many prior disclosures about the dosing of flowing liquid streams; US-A-2843139 describes an arrangement for adding a treating agent to water flowing in the main in direct proportion to the volume of water flowing, up to a predetermined maximun rate of flow, and for proportionately reducing, limiting and/or ceasing treatment when the water flow rate exceeds this predetermined maximum. US-A-3928197 describes the treatment of water with a disinfectant to render it potable, wherein the supply of disinfectant, for example chlorine, is substantially proportional to the demand put upon the system. US-A-4234425 discloses a fluoridation system in which a water line includes a venturi nozzle having a passage for withdrawing water from the line, transferring it to a chamber containing a soluble fluoride and returning the resultant fluoridated water to the line. US-A-3306504 describes the regeneration of ion exchange particles by first treating them with an acid and then with a brine, employing a dispenser which adds a predetermined amount of acid to the line conveying the resin regeneration water. US-A-3306452

describes a metering chamber in conjunction with a reservoir chamber for an acid solution, which is used to treat an ion exchange resin prior to a brine solution, in regenerating the resin. US-A-3325012 discloses a similar system to those in the two previous patents, involving an acid-dispensing apparatus. US-A-3809291 relates to the dispensing of two or more liquids from separate reservoirs or containers in uniform and precisely-predetermined portions, in either a continuous or intermittent fashion and at variable rates as required. Finally, US-A-4193516 discloses a liquid proportioner for mixing two liquids, which is suitable for dispensing a medicament/water mixture for animals, the medicament being diluted to a predetermined concentration.

While all the devices known from these publications are useful in the mixing of various liquid components, they are only suitable for roughly approximating concentrations of one liquid in another or for applications utilizing very high or very low flow rates. None of these known devices is capable of operation over a wide range of concentrations. This invention provides a method and apparatus for accurately dosing a flowing stream of a first liquid with a second liquid in a manner which is independent of the flow rate of the first liquid. The present invention also makes it possible to operate so that the ratio of the flow rates of the first and second liquids remains constant, regardless of the flow rate of the first liquid.

According to one aspect of this invention, an apparatus is provided for accurately dosing a flowing stream of a first liquid with a second liquid, wherein the first liquid is conveyed along a main into which the second liquid is introduced, characterized in that a laminar flow element is disposed in the main in order to cause laminar flow and a laminar flow injector is provided for introducing the second liquid into the main, downstream of the laminar flow element, under laminar flow conditions and at a rate proportional to the pressure drop across the laminar flow element.

According to another aspect of the present invention, a method is provided for accurately dosing a flowing stream of a first liquid with a second liquid, wherein the first liquid is conveyed along a main into which the second liquid is introduced, characterized in that, in the main, a laminar flow zone is provided in which the first liquid moves under the laminar flow conditions and the second liquid is injected under laminar flow conditions into the first liquid downstream of the laminar flow zone and at a rate proportional to the pressure drop across such zone.

In a preferred embodiment of the invention, the apparatus includes a proportioning device which is arranged to apply a force to a source of the second liquid proportional to the pressure drop across the laminar flow element and the second liquid source is in communication with the injector. Preferably the proportioning device comprises first and second chambers for the first and second liquids respectively, the first chamber surrounds the second chamber and communicates with the main at a point upstream of the laminar flow element and the second chamber communicates with the injector.

This laminar flow element causes the water to flow in the main under laminar conditions, that is so that the Reynolds number is less than 2,000. The injector located downstream of the laminar flow element injects the dosing chemical into the water stream also under a laminar flow regime, so that both streams are controlled and this enables the accurate dosing of the invention to be achieved.

The proportioning device can take any one of a number of forms and utilizes the flow rate in the main to exert a force on the chamber in which the dosing chemical is stored. For example, one suitable form of device comprises a cylinder containing a free-floating piston, one side of which is connected to the main upstream of the laminar flow element, while the other is connected as the input to the laminar flow injection device. As the flow of the water in the main exerts a pressure on the piston, it moves so as to reduce the volume of the chamber in which the dosing chemical is stored and forces the dosing chemical through the laminar flow injection device into the main downstream of the laminar flow element. Moreover, this occurs at a rate directly proportional to the flow rate of the water in the main.

A second and more preferred type of proportioning device includes a chamber divided by a flexible member into two distinct zones which are not in fluid flow relationship. For example, this device can be a flexible bag disposed within a rigid chamber. The chamber is in direct communication with the water main at a point upstream of the laminar flow element. The flexible bag is in direct communication with the laminar flow injection device. As water flows through the main into the chamber, a force is exerted on the flexible bag, causing the chemical dosing agent to flow through the injection device into the main in direct proportion to the flow rate within the main. This leads to accurate dosing of the water in the main. A change in the flow rate of the water in the main has no effect upon the ratio of the flow water in the main to the flow of dosing chemical into the main, that is regardless of the flow rate of the water in the main, the ratio of the water to the dosing chemical remains a constant. Further, because of the laminar flow element present in the main and the laminar flow injection device, accurate dosing of the water

0153530

stream is not only possible but practical even under extremely low flow rates. This advantage makes the method and apparatus of the invention useful for a wide variety of applications, ranging for instance from commercial applications for the control of pH or chlorination of water streams to the dosing of streams for the feeding and administration of medicines to animals, where highly accurate control of the quantities involved is an absolute requirement.

Another aspect of this invention is an adjustable laminar flow element, comprising a plurality of capillary tubes disposed in a conduit in axial alignment therewith and an adjustable closure arrangement is provided for closing off a predetermined portion of the capillary tubes. When installed in a main, this element adjustably controls the pressure drop across itself while the flow through the element remains in the laminar regime. Thus, by changing the pressure drop across the laminar flow element, the quantity of dosing chemical per given quantity of water changes in proportion thereto. The adjustable closure arrangement can shut any given percentage of the capillary tubes, in order to increase the pressure drop across the laminar flow element. Thus by decreasing the number of open capillaries, the pressure drop is increased in the same proportion as the number of capillaries blocked off by the adjustment.

In order that the invention may be fully understood and appreciated, preferred embodiments are described below, by way of illustration, in conjunction with the accompanying drawings, in which the same references are applied to the same parts and:

Figure 1 shows diagrammatically and partially in section one form of apparatus in accordance with this invention;

Figure 2 shows a schematic view of an adjustable laminar flow element in the fully opened position;

Figure 3 shows a schematic view of the laminar flow element of Figure 2 in the fully closed position;

Figure 4 shows the laminar flow element of Figure 2 from a point upstream in the flow of water;

Figure 5 shows a cross-sectional view of a laminar flow injection device in accordance with this invention;

Figures 6A, 6B and 6C show a method for making a laminar flow injection device in accordance with this invention.

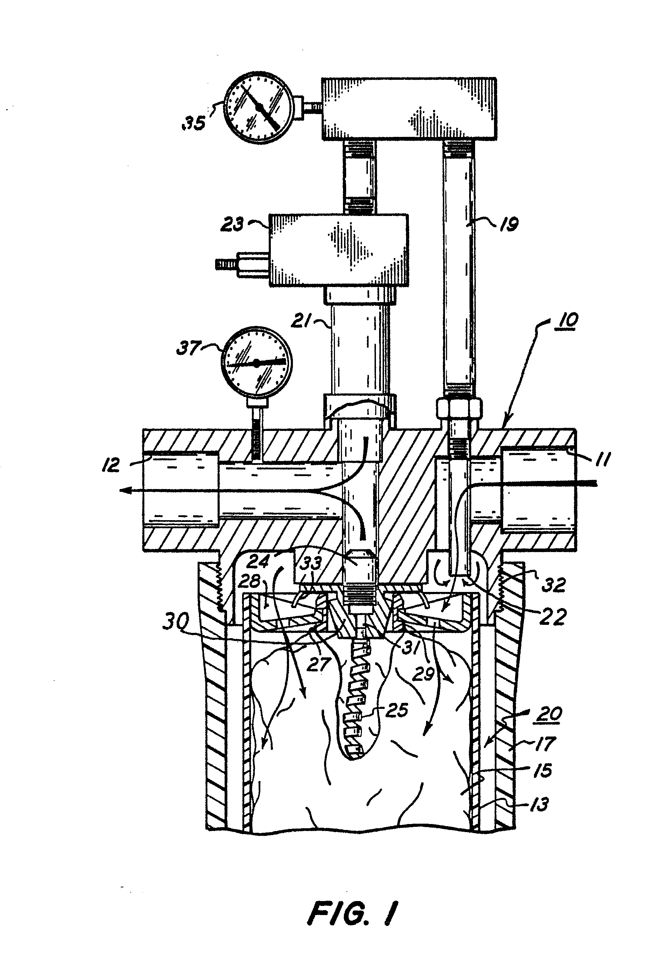

A dosing apparatus or device in accordance with this invention, as shown in Fig. 1, is inserted into a water main 10, by connecting an inlet 11 and an outlet 12 of the device to the main 10 by any suitable means, involving flanges, threads or other means, as is well known in pipe fitting.

The device includes means for carrying an outer container 17, attached to the body of the device by means of a threaded connection 32, for instance. The container 17 houses a proportioning device 20, comprising a rigid container 13 in which a flexible bag 15 is located. The container 13 and the bag 15 and the other parts of the proportioning device 20, described below, are attached to the body of the dosing apparatus or device within the outer container 17. The inlet 11 communicates with the interior of the container 17 and also with the inlet opening 22 of a side conduit 19, which is mounted through the wall of the device adjacent the inlet 11 and is connected at its outlet end with a further conduit to which a pressure guage 35 is attached, then to an adjustable laminar flow element comprising an adjustment unit 23 and a laminar flow unit 21 per se. The outlet from the latter is connected to the outlet 12 of the dosing apparatus or device and a further pressure guage 37 is attached to the device in the region between the laminar flow element 23, 21 and the outlet 12 where the solution of chemical is dosed into the stream of water.

Thus, in this embodiment of the apparatus of the invention, the inlet 11 is not in direct communication with the outlet 12 and, instead, water entering the inlet 11 from the main 10 first flows into the proportioning device 20, made up of the rigid container 13 and the flexible bag 15, disposed within the outer container 17. The container 13 surrounds the bag 15 and, as the water flows over the bag 15 and fills the space between it and the container 13 and then flows out again, heat exchange occurs between the water and the dosing chemical contained within the flexible bag 15. As a result, the temperature of the dosing chemical within the bag 15 quickly approximates to the temperature of the feedwater.

As the water enters the proportioning device 20 and passes into the rigid container 13, it exerts a pressure on the bag 15 and therefore on the dosing chemical within the bag 15, so forcing the chemical from the bag 15 into the interior of a flexible tube 25 which is in direct communication with a laminar flow injection device 24. Thus, a solution of the dosing chemical is forced from the flexible bag 15 through the laminar injection device 24 into the main 10.

In order to show clearly the connection between the flexible bag 15 and the injection device 24, the bag 15 is shown partially cut away at its top in Fig. 1. The bag 15 has a flexible opening 27 in it and can itself be made of any suitable material, for example, polyethylene or polypropylene, which is heat-sealed or ultrasonically sealed to the opening 27. This opening 27 in the bag 15 fits within a suitable opening 29 in the top of the rigid container 13. A stopper 30, which also serves as the holder for the laminar flow injection device 24, is inserted into the opening 27 in the bag 15. There is a passageway 31 through the stopper 30 for connecting the injection device 24 with the flexible tube 25. The tube 25 is in the form of a helix and this arrangement permits entry of the dosing chemical into the central conduit portion at any point. This facilitates complete removal of the contents of the bag 15 in use. The stopper 30 also carries a number of dependent fingers 33 which engage between radially-extending vanes 28 provided on the top of the rigid container 13 and prevent the bag 15 from twisting when the outer container 17 is connected to the apparatus by engagement of the threaded connection 32.

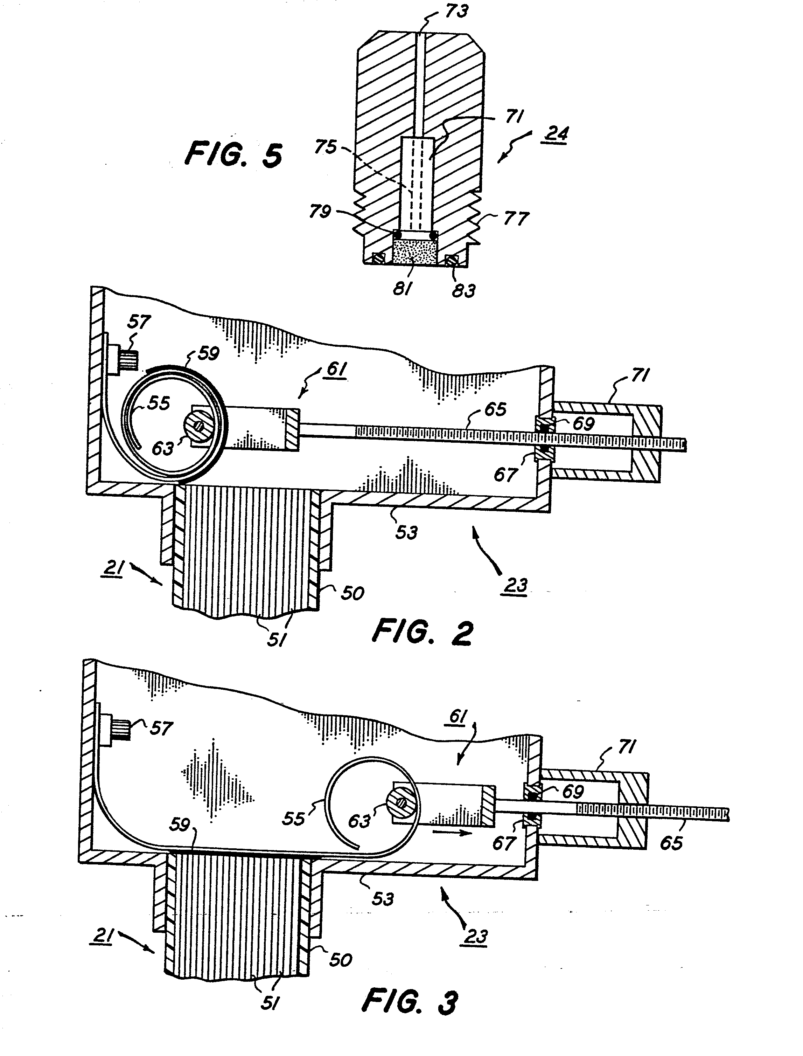

Apart from the water which passes into the proportioning device 20, as just described, the path of the water in the apparatus is as follows: after entering the side conduit 19 at the inlet opening 22, the water flows to the laminar flow element 23,21. This includes the adjustment unit 23, more fully described with reference to Figure 2. In its broadest aspect, however, the invention provides a laminar flow element such as the unit 21 and, since the pressure drop for any given temperature and rate of flow of water across the laminar flow element 21 is a constant, the rate of injection of dosing chemical for a given laminar flow injection device 24 also is a constant. Where variable dosing ratios are desired, it is advantageous to provide means, such as the unit 23, for adjustably controlling the pressure drop across the laminar flow element 21. The pressure guages 35 and 37 are located on either side of the laminar flow element 21 and so allow the pressure drop across it to be made, as desired.

The adjustable laminar flow element 23, 21 can take the form shown in Figures 2 to 4, described in greater detail below. The means for adjustment may also be the combination of a normal valve, such as ball or gate valve, in series with the laminar flow element 21. This element 21 includes a plurality of capillaries which fill the section of conduit housing the element 21 and bring about laminar flow in that region or zone. While the combination of a ball valve and the laminar flow element 21 is a practical solution generally suitable for most purposes, the accuracy and control of dosing of the chemical into the water main, with this form of apparatus and under the conditions it provides, is not as precise as when the flow is controlled by an adjustable laminar flow element such as the unit 23 shown in Figures 2 to 4. The reason for this is that the flow in the valve is turbulent and the pressure drop across the flow valve is in the turbulent region and not in the laminar flow region. However, in many industrial applications, this approximation is sufficient. Furthermore, where applicable, a turbulent flow valve in combination with the laminar flow element 21 is much more economical.

In the preferred form of the apparatus shown in Fig. 1 and also in Figs. 2 to 4, the water proceeds through the laminar flow element 21 and so impinges upon the laminar flow injection device 24, before passing on to flow from the outlet 12 into the downstream portion of the main 10.

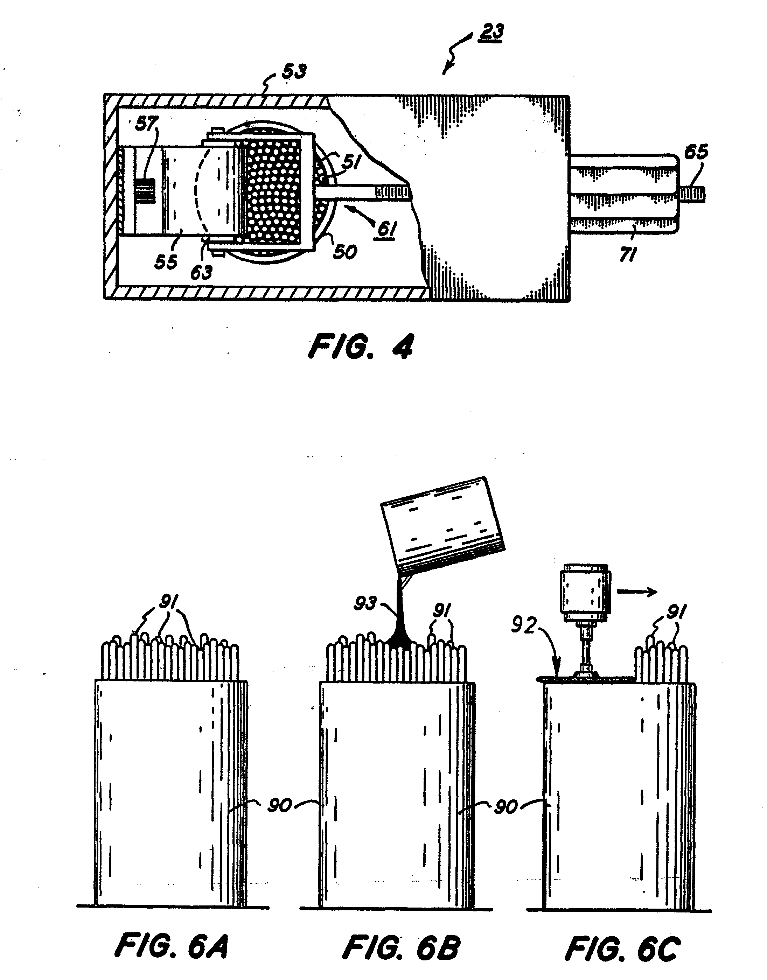

Referring to Figures 2 to 4, the laminar flow element 21 comprises a housing in the form of a length of conduit 50, such as a plastics pipe, containing a plurality of capillary tubes 51 which, in operation, cause the flow of water through the element 21 to be in the laminar regime. The capillary tubes 51 may be made of any suitable material, although glass capillaries are preferred. The adjustable valve unit, shown generally at 23, includes a water-tight housing 53 connected directly to the laminar flow element 21. Disposed within the housing 53 is a wound helical constant force spring 55 which is rigidly affixed to the wall of the housing 53 by a screw mounting arrangement 57. The spring 55 has a soft coating 59 of a material such as a silicone upon it, at least on the part of its surface which engages the ends of the capillary tubes 51 when the spring 55 is in the fully extended position, as shown in Figure 3. An adjustment means 61 carries a roller 63 having a surface which engages the spring 55 in such a manner that, as the spring 55 is uncoiled to cover additional capillaries, the spring slides or rolls on the roller surface 63. The adjustment means 61 includes a threaded portion 65 which passes through the housing 53 by way of a sealing mechanism 67 which includes an O-ring 69. Externally of the housing 53, a nut 71, such as a cap nut, is disposed in threaded relationship with the adjustment means 61 and, when tightened or loosened, respectively uncoils or recoils the spring 55. Figure 2 shows the adjustable laminar flow element 23 in the totally opened position, none of the ends of the tubes 51 being closed off by the coating 59 on the spring 55, while Figure 3 shows the same device in the totally closed position. While the valve or adjustment unit 23 can be made so as to close off totally all the capillaries 51, it can be seen from Figure 4 that the device can be made so that, when the adjustable laminar control device is in the totally closed position, not all of the capillary tubes are sealed, because some of the tubes lie outside the region of operation of the spring 55. Thus, the device as shown herein is not designed to close off totally the laminar flow element 21, but to serve as an adjustment device which has an operating range from 100% open to approximately 10% open, so as to adjust the pressure drop across the laminar flow element 21. The purpose of this arrangement is to allow the element 21 to provide pressure drop adjustment in the laminar regime.

It will be evident that the pressure drop is adjusted by covering more or less of the capillary tubes 51 by uncoiling or rewinding the constant force spring 55.

It will be seen from the following description that an adjustment range of 10 to 1 of the dosing chemical injected into the main can be achieved very readily, while at the same time ensuring that the apparatus operates well within the boundaries of the laminar regime. It is widely assumed that laminar flow exists when the Reynolds number of the flow condition is less than 2,000. Thus, operation at a Reynolds number of 1,000 or less is certainly within the laminar region. In the arrangement shown in Figures 2 to 4, wherein the capillary tubes 51 have an internal diameter of 0.33 mm (0.013 inch), the laminar control element 21 contains a total of 2,000 such capillary tubes and has a length of 76mm (3 inches) and the water flow rate at $22^{O}C$ ($70^{O}F$) in the main is 3 l (0.8 US gallon) per minute and has a viscosity of 0.97 centipoise and a density of 997.95 $Kg/m^3$ (62.3 pounds per cubic foot), the Reynolds number is calculated from the formula:

$$Re = 50.6 \left[ \frac{\rho \quad Q}{d \; \mu \; N} \right]$$

where

Q is the flow rate of water in US gallons per minute, N is the number of tubes exposed to the flow,

ρ is the density of the water in pounds per cubic feet, d is the inside diameter of the capillaries in inches

and

μ is the absolute viscosity of the water in centipoise.

Substituting these values in the formula, the Reynolds number is found to be 100. When this calculation is carried out for the adjustable laminar flow element shown in Figure

where 200 tubes are exposed to the flow, the Reynolds number is found to be 1,000. Both of these Reynolds numbers are well within the laminar flow region. The pressure drop across the laminar flow element is determined by the Hagen-Poiseuille relation:

$$\Delta P = .000273 \ \frac{\mu \ L \ Q}{d^4 \ N}$$

where

$\Delta P$ is the pressure drop in pounds per square inch,

L   is the length of the laminar flow element in feet,

$\mu$   is the absolute viscosity of water in centipoise,

d   is the internal diameter of the capillaries in inches,

Q   is the flow rate of water in US gallons per minute and

N   is the number of tubes exposed to the flow.

In the condition of the adjustable laminar flow element shown in Figure 2, the pressure drop for the above conditions is equal to 0.93 psi ($6.41 \ kN/m^2$). In the condition shown in Figure 3, where 200 tubes are exposed to the flow, the pressure drop is 9.3 psi ($64.11 \ kN/m^2$). This represents an adjustable range within the laminar regime of 10 to 1.

Figure 5 shows a cross-sectional view of the laminar flow injection device 24 generally shown in Figure 1. This device 24 includes a glass tube 71 having a capillary bore 75 through it which opens into a conduit portion 73. The injection device 24 also includes a threaded portion 77 for engaging the stopper 30, as shown in Figure 1, and a sealing arrangement including O-rings 79 and 83, so as to form the desired fluid flow relationship between the contents of the bag 15 and the laminar flow injection device 24. A filter element 81 is provided within a recess in the end of the device 24 at the end of the glass tube 71 and the bore 75, in order to prevent solid particles of the dosing chemical from reaching the capillary bore 75.

The injection device 24 shown in Figure 1 can also be a tube, such as a plastics cylindrical tube having a fine threaded screw tightly fitted therein. The spiral path formed by engagement of the turns of the screw thread with the cylinder wall of the tube causes the flow to be in the laminar regime.

Figures 6A to 6C show a method of manufacture of the laminar flow element 21 and the injection device 24 respectively. A housing in the form of a length of conduit 90, which may be a length of plastics pipe, is placed on end and a plurality of capillary tubes 91 are inserted so as substantially to fill the bore of the conduit 90. The tubes 91 are open at the ends which are disposed at the lower end of the conduit 90 and are coplanar with such lower end, while the upper ends of the tubes 91 extend out of the upper end of the conduit 90. As shown in Figure 6A, the tubes 91 are closed at their upper ends, in order to prevent an epoxy potting compound 93, which is poured over the bundle of tubes 91 in order to seal them into the conduit 90, as shown in Figure 6B, from sealing off the capillaries 91. However, it should be noted that this is a preferred step in the method and the potting compound 93 can instead be poured at the edge of the conduit 90 in a careful manner without it entering and blocking the capillaries 91. Subsequent to hardening of the potting compound 93, the upper ends of the capillary tubes 91 are removed by any suitable technique, such as the abrasive wheel 92 shown in Figure 6C, which forms a substantially planar surface at that end of the conduit 90.

In order to compare the accuracy and reliability of the method and apparatus of this invention as shown in Figure 1 (except for the use of a non-adjustable laminar flow element 21), at different water flow rates in the main, with a corresponding appratus having an orifice in place of the laminar flow control element, to simulate the provision of a throttle valve in the main, the following experiments were conducted:

A feedwater supply was first prepared by deionizing water until its resistivity measured 18.3 Megohm-cm (corrected to $25^{\circ}C$). This represents the complete absence of ionized material in the water. Secondly, a solution of the dosing chemical was made up by adding sodium chloride to the deionized water so as to give a brine having a concentration of 1,000 parts per million. This salt solution was subsequently used as the dosing chemical. Resistivity measurements of the dosed stream of water are indicative of the ability of the system to provide controlled dosing.

In each case, both the temperature of the feedwater and that of the dosing chemical brine solution was $10^{\circ}C$ ($50^{\circ}F$). The flow rate of the water through the main was varied by changing the upstream pressure of the feedwater. The results of these experiments are set forth in the following Table, the last column of which, marked "Flow Ratio", is the ratio of the feedwater flow rate to the brine flow rate. Runs A to D record the results obtained utilizing the orifice in the line, causing a pressure drop in the turbulent regime, while runs E to G are in the laminar regime. The runs in accordance with this invention provide a constant flow ratio, while the flow ratio in the turbulent regime varies significantly.

TABLE

| RUN | FEEDWATER FLOWRATE | FEEDWATER CONC'N | EFFLUENT CONC'N | BRINE FLOWRATE | FLOW RATIO |
|-----|--------------------|------------------|-----------------|----------------|------------|
| A | 0.6 gpm | 0 ppm | 6.4 ppm | .0038 gpm | 156 |
| B | 0.8 | 0 | 8 | .0064 | 125 |
| C | 1.0 | 0 | 9 | .009 | 111 |
| D | 1.1 | 0 | 9.1 | .010 | 110 |
| E | 0.6 | 0 | 8 ppm | .0048 | 125 |
| F | 0.8 | 0 | 8 | .0064 | 125 |
| G | 1.0 | 0 | 8 | .008 | 125 |

The Table above illustrates the lack of uniformity in dosing rate when the pressure drop in the system is over a turbulent flow zone, in comparison with a pressure drop across a laminar flow zone, where the flow rate of the feedwater is varied. In actual practice, the flow rate of the feedwater is substantially constant, varying only in small amounts. Thus, where a dosing system in accordance with this invention is to be installed in a given application, the conditions present, such as the flow rate of the feedwater and the dosing concentration desired, are predetermined. In such systems, the flow rate of the feedwater is generally a constant, as mentioned above. However, the pressure drop across the laminar flow zone varies widely, because of changes in temperature of the feedwater.

In laminar flow system, the flow rate is determined by the formula:

$$Q_W = K_L \frac{\Delta P}{\mu W}$$

where

$Q_W$ is the flow rate of water under laminar conditions in US gallons per minute,

$K_L$ is a constant,

$\Delta P$ is the differential pressure across the laminar zone in pounds per square inch gauge (psig), and

$\mu_W$ is the absolute viscosity of water in centipoise.

It can be readily seen from this formula that, where the flow rate ($Q_W$) is a constant, the pressure drop across the system varies inversely to the viscosity of the feedwater. In the system described above, in accordance with this invention, the dosing chemical is also introduced through the laminar flow injector under laminar flow conditions and in proportion to the pressure drop across the laminar flow zone. The flow rate of the dosing chemical into the feedwater is also dependent upon the viscosity of the dosing chemical. Since, in the system described, the dosing chemical is at substantially the same temperature as the feedwater, the viscosity of the dosing chemical varies with the temperature of the feedwater in a comparable fashion to the viscosity of the feedwater. Since the pressure drop across the system controls the flow rate of the dosing chemical into the feedwater in accordance with the viscosity of the dosing chemical, the flow ratio of the feedwater to the dosing chemical remains substantially constant, even with varying temperature conditions.

The same is not true where the feedwater in the main is within the turbulent regime. This is readily apparent from the formula for the flow rate of a liquid in a pipe in the turbulent region,

$$Q_T = K_T \sqrt{\frac{\Delta P}{\rho}}$$

wherein

$Q_T$ is the flow rate of water under turbulent conditions in US gallons per minute,

$K_T$ is a constant,

$\Delta P$ is the pressure drop across the turbulent zone, and

$\rho$ is the density of water in pounds per cubic foot.

This formula shows that, where the flow rate is a constant, the pressure drop across the turbulent flow zone varies in accordance with the density of the water. The density of water varies only slightly with large changes in temperature. For example, at $4.5^{\circ}C$ ($40^{\circ}F$), the density of water is 999.97 $Kg/m^3$ (62.426 pounds per cubic foot) while at $27^{\circ}C$ ($80^{\circ}F$) the density of water is 996.67 $Kg/m^3$ (62.220 pounds per cubic foot). Thus, in accordance with this invention, an additional advantage is obtained, in that the dosing concentration of the feedwater remains constant, even over wide variations in the temperature of the feedwater.

Although the invention has been described in considerable detail in the foregoing, it is to be understood that such detail is solely for the purpose of illustration and that many variations in the method and apparatus for dosing flowing streams can be made by those skilled in the art without departing from the scope of the invention as set forth in the claims.

CLAIMS:

1. An apparatus for accurately dosing a flowing stream of a first liquid with a second liquid, wherein the first liquid is conveyed along a main (10) into which the second liquid is introduced,
characterized in
that a laminar flow element (21) is disposed in the main (10) in order to cause laminar flow and a laminar flow injector (24) is provided for introducing the second liquid into the main (10), downstream of the laminar flow element (21), under laminar flow conditions and at a rate proportional to the pressure drop across the laminar flow element (21).

2. An apparatus according to claim 1, wherein a proportioning device (20) is arranged to apply a force to a source (15) of the second liquid proportional to the pressure drop across the laminar flow element (21) and the second liquid source (15) is in communication with the injector (24).

3. An apparatus according to claim 2, wherein the proportioning device (20) comprises first (13) and second (15) chambers for the first and second liquids respectively, the first chamber (13) surrounds the second chamber (15) and communicates with the main (10) at a point upstream of the laminar flow element (21) and the second chamber (15) communicates with the injector (24).

4. An apparatus according to claim 3, wherein the chambers (13,15) are arranged so that the first liquid flows over the second chamber (15).

5. An apparatus according to any preceding claim, wherein the laminar flow element (21) is a tubular conduit (50;90) containing a plurality of capillary tubes (51;91) in axial alignment therewith.

6. An apparatus according to any preceding claim, wherein the pressure drop across the laminar flow element (21) is adjustable.

7. A method for accurately dosing a flowing stream of a first liquid with a second liquid, wherein the first liquid is conveyed along a main (10) into which the second liquid is introduced, characterized in that, in the main (10), a laminar flow zone (21) is provided in which the first liquid moves under the laminar flow conditions and the second liquid is injected under laminar flow conditions into the first liquid downstream of the laminar flow zone (21) and at a rate proportional to the pressure drop across such zone.

8. A method according to claim 7, wherein the pressure drop across the laminar flow zone (21) is varied while maintaining laminar flow conditions, so as to adjust the rate of flow of the second liquid into the first liquid to a predetermined value.

9. A method according to claim 7, wherein the rate of flow of the first liquid is predetermined, the pressure drop across the laminar flow zone (21) is adjusted to provide a predetermined rate of dosing the second liquid into the first liquid and the temperature of the second liquid is controlled by the temperature of the first liquid.

10. An adjustable laminar flow element comprising a conduit 50, characterized in that a plurality of capillary tubes (51) are disposed in the conduit (50) in axial alignment therewith and an adjustable closure arrangement (23) is provided for closing off a predetermined portion of the capillary tubes (51).

11. A laminar flow element according to claim 10, wherein the closure arrangement (23) includes a constant-force coiled spring (55) which is arranged, as it is uncoiled, to close off an increasing portion of the capillary tubes (51) and wherein the degree of uncoiling of the spring (55) is adjustable.

12. A method of making a laminar flow element (21) comprising a cylindrical conduit (90), characterized in

that a plurality of capillary tubes (91) each having a sealed end and an open end are disposed in the conduit (90) so that the open ends of the tubes (91) and one end of the conduit (90) are substantially coplanar and the sealed ends of the tubes (91) extend from the other end of the conduit (90), a potting compound (93) is poured over the sealed ends of the tubes (91) so as substantially to fill the interstices between them and, when the potting compound (93) has solidified, the portions of the tubes (91) extending from the conduit (90) are removed (92), so that the thus-opened ends of the tubes (91) are substantially coplanar with such other end of the conduit (90).

0153530

**FIG. 1**

**FIG. 5**

73

71

24

75

79

77

81

83

57

59

55

61

65

69

71

63

67

53

21

23

50

51

**FIG. 2**

57

61

71

55

59

63

67

69

65

53

21

23

50

51

**FIG. 3**

**FIG. 4**

**FIG. 6A**   **FIG. 6B**   **FIG. 6C**